# EUROPEAN PATENT APPLICATION

(11) **EP 1 176 351 A2**
(43) Date of publication of application: **30.01.2002**
(21) Application number: 01306339.1
(22) Date of filing: 24.07.2001
(51) Int. Cl.: F16L 11/11, F16L 11/15, F16L 11/112, F16L 11/115

(54) **Convoluted hose**

(30) Priority: 25.07.2000 GB 0018236; 21.12.2000 GB 0031259
(71) Applicant: AVON RUBBER PLC, Bradford-On-Avon, Wiltshire BA15 1AA (GB)
(72) Inventor: Turner, Donald Milne, Bathford, Bath BA1 7RW (GB); Arrighi, Jean-Jacques, 56000 Vannes (FR); Robinault, Michel, 56860 Sene (FR)
(74) Representative: Calderbank, Thomas Roger

(57) **Abstract**

A convoluted hose is disclosed, being particularly suitable for use in a motor vehicle engine. The hose has a series of annular corrugations (2), which improve the flexibility of the hose. Each corrugation (2) varies gradually in height around the hose, from a minimum height to a maximum height. In one embodiment, the minimum height is separated from the maximum height by at least 120°, preferably 180°, and the minimum height may be zero. In another embodiment, the corrugations are of elliptical cross section, each corrugation having two maximum height parts and two minimum height parts, the minimum height being 10% of more of the maximum height. The arrangement of minimum height parts of the corrugations allows limitation of axial expansion of the hose.

## Description

This invention relates to hoses, being tubes for containing or conveying a fluid (liquid or gas).

There are many situations (e.g. the hoses in vehicle engines) when it is desirable that a hose is resistant to significant expansion when inflated under pressure but also flexible enough to accommodate small relative movements between the fittings to which it is attached. It is often desirable that the hose maintains an overall envelope, when inflated to a few atmospheres pressure, and so avoids contact with other nearby equipment.

Automobile hoses usually have one or more convolutions and movement is accommodated by bending at these convolutions. However when such a hose is inflated the internal pressure tends to cause the hose to expand axially by opening of the convolutions. This is undesirable due to the need to avoid contact with other machinery.

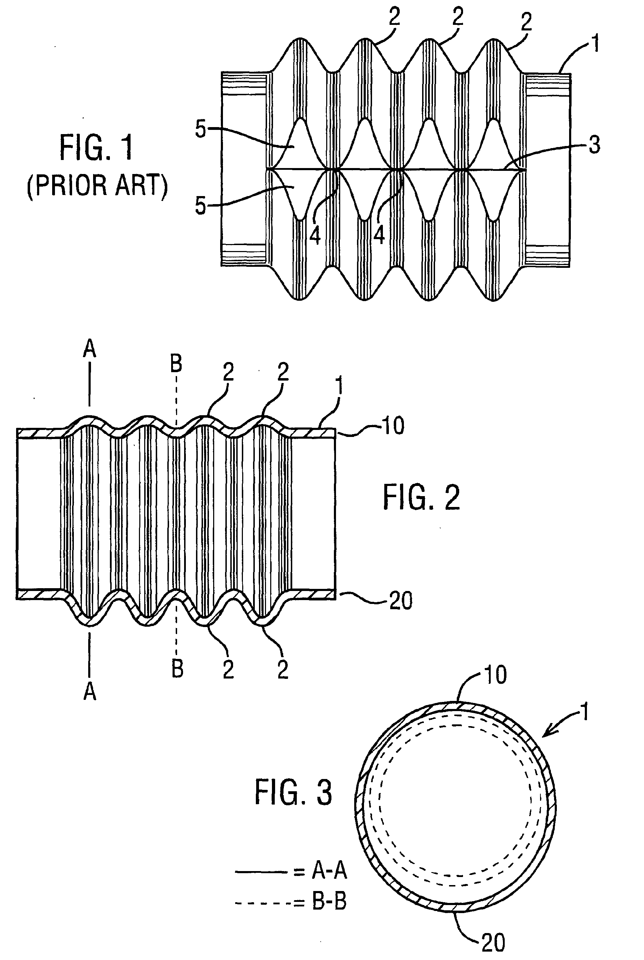

One solution to this problem is provided by eliminating the convolutions along two diametrically opposed lines on opposite sides of the hose. Fig 1, of the accompanying drawings, is a side view of such a hose. The hose 1 has convolutions 2, in the form of annular corrugations. The convolutions 2 are eliminated along two diametrically opposed lines 3 on opposite sides of the tube. Each convolution 2 maintains a uniform height as it extends around the hose, apart from in the small regions 5 close to the lines of elimination 3. In these regions the height of the convolutions reduces rapidly as they curve steeply towards the line of elimination. Only one of the lines of elimination 3 can be seen in Fig 1, the other line being on the opposite side of the hose. The design, shown in Fig 1, accommodates small movements through bending of the convolutions 2 with the unconvoluted lines 3 acting as neutral axis of bending. However as these lines 3 have no convolutions, they do not expand axially under pressure and they prevent the rest of the hose from doing so. A drawback of this design is that it gives rise to a concentration of stresses at the junctions 4 of the lines 3 and the convolutions 2 and this can lead to weakening and premature ageing of the hose. The current invention provides an alternative design in which the aforementioned stresses are not so concentrated.

At its most general, the present invention provides a convoluted hose in which each convolution varies gradually in height as it extends around the hose.

According to a first aspect of the present invention, there is provided a hose, having a tubular wall, wherein the inner and outer radii of the wall vary axially along the hose to give a plurality of bendable convolutions, the convolutions being defined by an axial sequence of alternate peaks and troughs, and each convolution having a height corresponding to the difference in radius between the corresponding peak and trough of that convolution, wherein each convolution varies gradually in height as the convolution extends around the hose, each convolution having a maximum height and a minimum height, there being a circumferential separation of at least 120° between a part of the convolution having the minimum height and any part of the convolution having the maximum height.It is envisaged that the invention will be particularly useful for hoses in vehicle engines but it is not limited to use in this field. An example of another field of application is in astronaut suits which need to be resistant to expansion (given that they maintain a much higher pressure inside than outside), but which also need to allow at least limited movement.

The convolutions are integral to the walls of the hose. The convolutions may take the form of a series of annular corrugations extending perpendicular to or at an angle to the axis of the hose. Alternatively the convolutions may take the form of a helix (for example, a helical corrugation) which extends around the hose, in which case each individual convolution is defined as one turn of the helix. The height of each convolution may vary up and down several times between the maximum and minimum height as the convolution extends once around the hose. Preferably, however, the height of each convolution increases gradually from the minimum height to the maximum height and then decreases gradually back to the minimum height as the convolution extends once around the hose.

It is not necessary that the minimum and maximum heights are axially aligned, although this may be the case in some embodiments. In other embodiments, the convolutions may alternate, so that the minimum height of one convolution is aligned with the maximum height of the adjacent convolutions, and vice versa. It would also be possible for the convolutions to have their maximum and minimum heights aligned for part of the hose, and for the convolutions of another part of the hose to have a different alignment.

Preferably, a first part of the hose has its convolutions shaped so that the minimum heights of the convolutions of the first part are axially aligned, and a second part of the hose has its convolutions shaped so that the minimum height of the convolutions of the second part are in a different axial alignment.

The maximum height of each convolution is preferably at least double its minimum height. Alternatively the minimum height may be zero so that the convolution is eliminated entirely at the point of minimum height. It is important that the variation in height of the convolutions is gradual as this gradual, as opposed to abrupt, variation helps to prevent stresses becoming too concentrated. Normally the variation will be uniform, so that there is continuous increase in the height of the convolution from the minimum to the maximum. This may be achieved, for example, if the variation in height is sinusoidal. The maximum height of each convolution is appreciable, preferably equal to or greater than 10% of the radius of the hose as measured at an unconvoluted portion. More preferably still the maximum height is equal to or greater than 20% of the radius of the hose as measured at an unconvoluted portion.

Typically, the maximum height of each convolution is 10% or more of the outer radius of the wall of the hose as measured at a trough.

Preferably, the angular rate of change of height of each convolution as it extends around the hose is continuous. Therefore, step-wise the changes in height of the convolutions are desirably avoided. Even more preferably, the angular rate of change of the angular rate of change of height of each convolution as it extends around the hose is continuous. Therefore, sharp changes in the slope of each convolution with respect to the hose are desirably avoided.

Preferably the point of minimum height of each convolution is separated circumferentially from the point of maximum height by an angle of at least 150 degrees and most preferably by at least 170 degrees. In a preferred embodiment the height of the convolutions varies gradually from a maximum height on one side of the tube to a minimum height on the opposite side of the tube (ie the points of minimum and maximum height are separated circumferentially by approximately 180 degrees).

The convolutions may be orientated with respect to each other so that the points of maximum height and/or their points of minimum height are all in line (meaning that they could be connected by an imaginary line parallel to the axis of the tube). The same may also be true of the points of minimum height. Alternatively the convolutions may be orientated so that the points of maximum height are not in line. It is preferable that at least some adjacent convolutions are orientated so their points of maximum height are in line, as this facilitates bending of the hose. The hose is preferably composed of stiff plastic, composites of rubber or plastic reinforced with textile fabric.

In the discussion of the first aspect above, it was possible for the minimum height of a convolution to be zero, but that first aspect covered alternatives in which this was not the case. It has been realised that useful devices are possible in which the height of the convolution changes around the hose, but does not fall to zero. Thus, each convolution forms a circumferential ridge, varying in height, around the hose. Whilst such hoses may fall within the scope of the first aspect, it is not essential that the separation of the maximum and minimum is 120 degrees since there may then be two minima and two maxima substantially uniformly separated. Thus, the use of a convolution in which the minimum is not zero represents a second aspect of the present invention, independent from the first aspect.
Thus, according to the second aspect of the present invention there is provided a hose, having a tubular wall, wherein the inner and outer radii of the wall vary axially along the hose to give a plurality of bendable convolutions, the convolutions being defined by an axial sequence of alternate peaks and troughs, each convolution having a height corresponding to the difference in radius between the corresponding peak and trough of that convolution, wherein each convolution varies gradually in height as the convolution extends around the hose, each convolution having a maximum height and a minimum height, the minimum height being 10% or more of the maximum height.

Preferably, each convolution has two points with the minimum height, the points with the minimum height being separated by a point with the maximum height. More preferably, each convolution has two points with the maximum height. Typically, the two points with minimum height are on opposite sides of the hose. Furthermore, the two points with the maximum height are typically on opposite sides of the hose.

Preferably, the cross-section of each convolution is elliptical such that there are two points with the maximum height, and two with the minimum height, with there being 180 degrees circumferential separation between the points with minimum height, 180 degrees circumferential separation between the points with maximum height and 90 degrees circumferential separation between each point with minimum height and a point with maximum height.

As with the first aspect, it is envisaged that the invention will be particularly useful for hoses in vehicle engines but it is not limited to use in this field. An example of another field of application is in astronaut suits which need to be resistant to expansion (given that they maintain a much higher pressure inside than outside), but which also need to allow at least limited movement.

The convolutions are integral to the walls of the hose. The convolutions may take the form of a series of annular corrugations extending perpendicular to or at an angle to the axis of the hose. Alternatively the convolutions may take the form of a helix which extends around the hose, in which case each individual convolution is defined as one turn of the helix. The height of each convolution may vary up and down several times between the maximum and minimum height as the convolution extends once around the hose. Preferably, however, the height of each convolution increases gradually from a minimum height to a maximum height and then decreases gradually back to a minimum height twice as the convolution extends once around the hose.

It is not necessary that the minimum and maximum heights are axially aligned between successive convolutions, although this may be the case in some embodiments. In other embodiments, the convolutions may alternate, so that the minimum heights of one convolution is aligned with the maximum heights of the adjacent convolutions, and vice versa. It would also be possible for the convolutions to have their maximum and minimum heights aligned for part of the hose, and for the convolutions of another part of the hose to have a different alignment.

Preferably, a first part of the hose has its convolutions shaped so that the minimum height of the convolutions of the first part are axially aligned, and a second part of the hose has its convolutions shaped so that the minimum height of the convolutions of the second part are in a different axial alignment.

The maximum height of each convolution is preferably at least double its minimum height. It is important that the variation in height of the convolutions is gradual as this gradual, as opposed to abrupt, variation helps to prevent stresses becoming too concentrated. Normally the variation will be uniform, so that there is continuous increase in the height of the convolution from a minimum to a maximum. This may be achieved, for example, if the variation in height is sinusoidal. The maximum height of each convolution is appreciable, preferably equal to or greater than 10% of the radius of the hose as measured at an unconvoluted portion. More preferably still the maximum height is equal to or greater than 20% of the radius of the hose as measured at an unconvoluted portion.

Typically, the maximum height of each convolution is 10% or more of the outer radius of the wall of the hose as measured at a trough.

Preferably, the angular rate of change of height of each convolution as it extends around the hose is continuous. Therefore, step-wise the changes in height of the convolutions are desirably avoided. Even more preferably, the angular rate of change of the angular rate of change of height of each convolution as it extends around the hose is continuous. Therefore, sharp changes in the slope of each convolution with respect to the hose are desirably avoided.

The convolutions may be orientated with respect to each other so that the points of maximum height are all in line (meaning that they could be connected by an imaginary line parallel to the axis of the tube). The same may also be true of the points of minimum height. Alternatively the convolutions may be orientated so that the points of maximum height are not in line. It is preferable that at least some adjacent convolutions are orientated so their points of maximum height and/or points of minimum height are in line, as this facilitates bending of the hose. The hose is preferably composed of stiff plastic, composites of rubber or plastic reinforced with textile fabric.

In a further aspect, the invention provides a motor vehicle with a convoluted hose according to the first aspect or the second aspect.

With respect to all of the aspects of the invention, it is to be understood that the convolution peaks may have similar axial dimensions to the convolution troughs. The convolutions peaks and/or troughs may be rounded or slightly angular. However, it is to be understood that the invention is not limited to this. In particular, it can be envisaged that the peaks have a larger axial dimension than the troughs, or visa versa. In that case, the peaks can more easily be envisages as plateaus. In that case, it may be more convenient to visualise the troughs as depressions in the hose.

Embodiments of the invention will now be described in further detail with reference to the accompanying diagrams, in which
Fig 1 is a side of a convoluted hose of the prior art in which the corrugations have been eliminated along two diametrically opposed lines on opposite sides of the tube and has already been described;
Fig 2 is a longitudinal cross section of a hose according to a first embodiment of the invention;
Fig 3 is a transverse cross section of a hose according to the first embodiment of the invention, along the line A-A of Fig 2;
Fig 4 is a plan diagram showing how bending moments can be used to offset the tension due to inflation pressure in a hose according to the present invention;
Fig 5 is a longitudinal cross-section of a hose according to a second embodiment of the invention;
Fig 6 is a longitudinal cross-section of a hose according to a third embodiment of the invention;
Fig 7 is a 3-dimensional view of a hose according to a fourth embodiment of the invention;
Fig 8 is a transverse cross section of a hose according to a fourth embodiment of the invention;
Fig 9 is a longitudinal cross section of a hose according to a fourth embodiment of the invention, along line A-A in Fig 8; and
Fig 10 is a longitudinal cross section of a hose according to a fourth embodiment of the invention, along line B-B in Fig 8.

Referring to Fig 2, a hose according to a first embodiment of the first aspect of the invention as a tube 1 is composed of stiff plastic or composites of rubber. Alternatively the tube may be composed of a plastic reinforced with textile fabric. The tube 1 has a series of annular corrugations 2 shown in Fig 2. Each annular corrugation extends circumferentially in a direction perpendicular to the length of the tube. There may be just one corrugation, several corrugations (as shown in Fig 2), or the corrugations can extend over the entire length of the tube. The height of each corrugation increases gradually from a minimum height on a first side of the tube 10 to a maximum height on the opposite side of the tube 20. The gradual increase in height of the corrugation(s) is shown in Fig 3 in which the broken line indicates the circumference of the tube at a point between corrugations or at an un-corrugated region. The low or zero height portion of the corrugation(s) prevents axial expansion of the tube by opening of the corrugations, but still allows bending to accommodate small movements. When bending occurs the neutral bending axis will be close to the side with minimum height corrugations.

When the hose is inflated the inflation pressure will generate a bending moment. The bending moment is given by the formula: Bending Moment = π P R³, where P is the inflation pressure and R is the radius of the hose. As the radius of the hose is of the order of 30mm the bending moment is small and will cause little distortion of the remainder of the hose. The hose will have a tendency to bend in a direction which stretches the side with maximum height convolutions and compresses a side with smaller or no convolutions, so the side with maximum height convolutions will be on the 'outer side' of such a bend. A hose in a vehicle engine is typically will have several bends to enable attachment to various fittings. In a hose according to the present invention these bends can be accommodated by bending of the convolutions. When the hose is inflated under pressure, a tension is created which tends to oppose the bends and push the hose into a straight line. If the hose is bent so that the side with maximum height convolutions is on the 'outer side' of the bend then the above mentioned bending moment of the hose in this direction will help to reinforce the bend and counteract the tension which works against the bend.

It may be advantageous to orientate the convolutions with respect to each other so that in certain portions of the hose the bending moments cancel each other out.

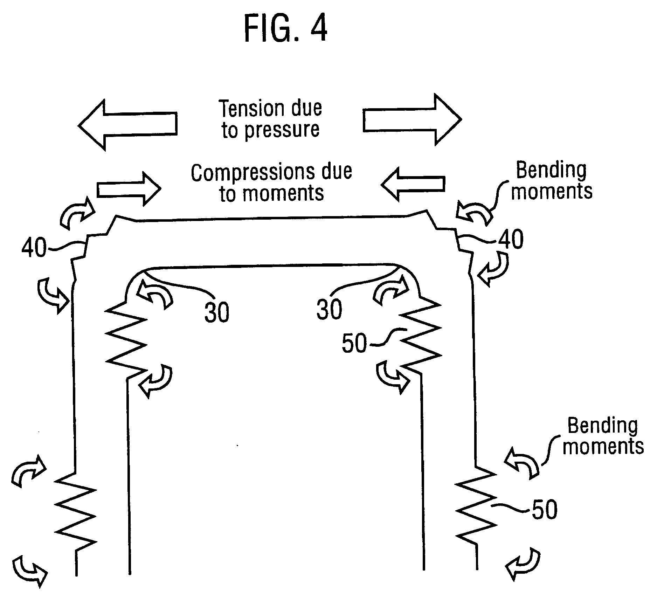

Fig 4 shows a hose 1 with two bends 30, the maximum height corrugations 40 are disposed on the outer side these bends. Hence at the bends 30 the tension due pressure in the hose is counteracted by compression due to the bending moments caused by the maximum height corrugations being on the outer side of the bend. Further down the hose there are alternate convoluted sections 50 which have the maximum height convolutions on opposite sides so that the bending moments cancel each other out and these sections of the hose remain straight.

In the first embodiment described above, the convolutions are arranged so that the maximum and minimum heights are axially aligned, so that points on the circumference where the minimum heights occur define a line parallel to the axis. The same is true of the maximum heights. This can be seen from eg. Fig 2. In that figure the minimum heights are all at the top of the hose as shown, and the maximum heights are all at the bottom.

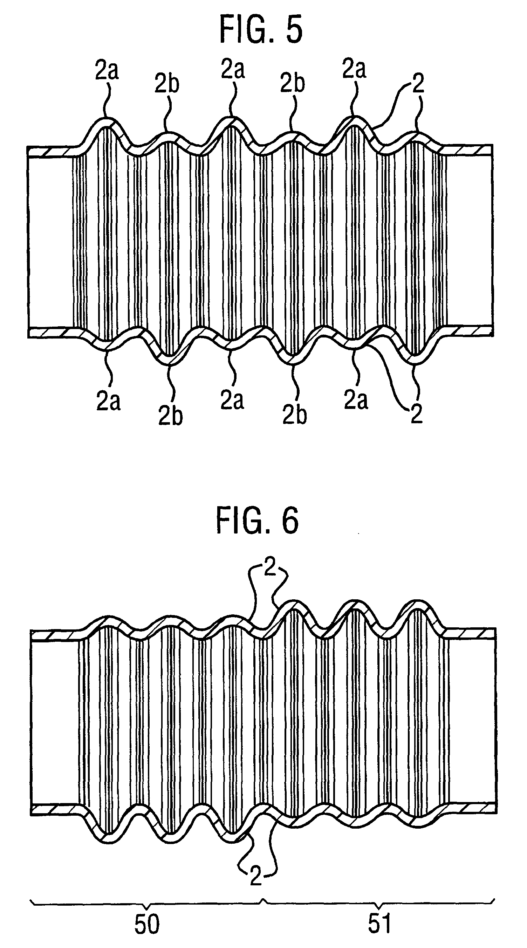

However, the present invention is not limited to such an arrangement. Fig 5 illustrates an embodiment in which the maximum and minimum heights of the convolutions 2 are alternate, so that there are convolutions 2a which have their maximum heights at the top of the hose in Fig 5, and have the minimum heights at the bottom, and convolutions 2b which have their minimum height at the top in Fig 5 and their maximum height at the bottom. The convolutions 2a and 2b are then arranged alternately. Thus, a line extending parallel to axis of the hose will be defined by alternate maximum and minimum heights.

A further embodiment is shown in Fig 6, in which the hose has a first section 50 in which the maximum and minimum heights have a first alignment, and a second section 51 in which they have a different alignment. In the embodiment of Fig 6, the alignments are reversed, so that the minimum heights in the section 50 are aligned with the maximum heights in section 51 and vice versa.

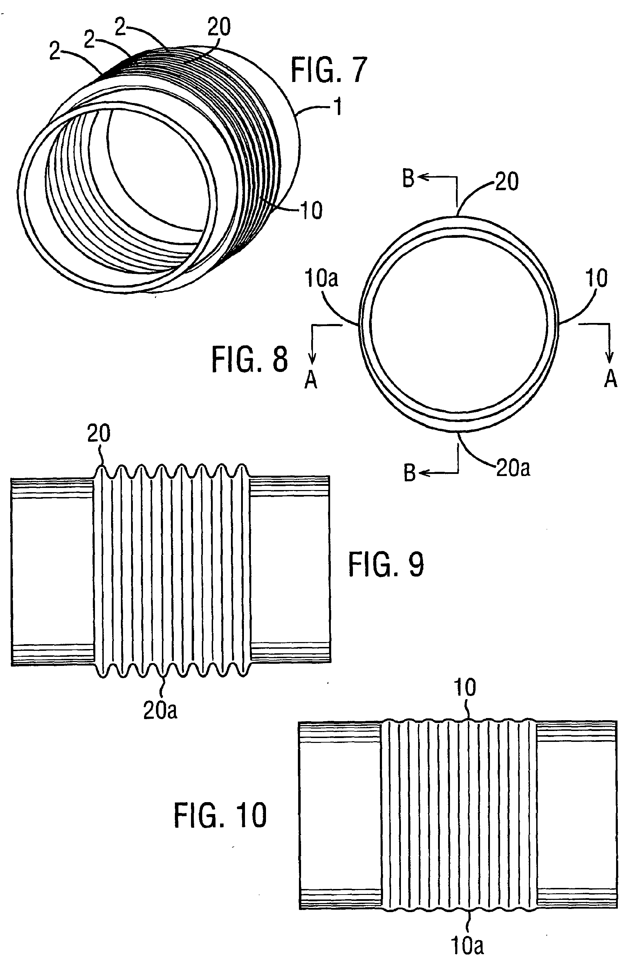

Fig 7 shows a hose according to a fourth embodiment, relating to the second aspect, of the present invention in 3-dimensional view. A tube 1 is composed of stiff plastic or composites of rubber. Alternatively the tube may be composed of a plastic reinforced with textile fabric. The tube 1 has a series of annular corrugations 2 and each annular corrugation extends circumferentially in a direction perpendicular to the length of the tube. There may be just one corrugation, several corrugations (as shown in Fig 7), or the corrugations can extend over the entire length of the tube. The height of each corrugation increases gradually from a minimum height on a first side 10 of the tube to a maximum height at a point 90 degrees around the circumference of the tube 20. Each corrugation has a further point at the minimum height directly opposite point 10 and a further point at the maximum height directly opposite point 20 (both not visible). The low or zero height portions of the corrugation(s) prevents axial expansion of the tube by opening of the corrugations, but still allows bending to accommodate small movements. The principles regarding bending are as discussed with regard to the first embodiment.

Fig 8 is a transverse cross section of the hose according to the fourth embodiment, showing the preferred elliptical shape of a corrugation. The points with minimum height 10 and 10a are positioned opposite each other, as are the points with maximum height 20 and 20a, with a 90 degree circumferential separation between each minimum height point and each maximum height point. In this embodiment, the minimum height of the corrugations is 20% of the maximum height of the corrugations.

Fig 9 shows a longitudinal cross section of the hose according to the fourth embodiment, along line A-A in Fig 8, such that the maximum height points 20 and 20a are at the top and bottom of the hose as viewed.

Fig 10 shows another longitudinal cross section of the hose according to the fourth embodiment, along line B-B in Fig 8, such that the minimum height points 10 and 10a are at the top and bottom of the hose as viewed.

Embodiments of the invention have been described by way of example only. Modifications of these embodiments, further embodiments and modifications thereof will be apparent to the skilled person and as such are within the scope of the present invention.

## Claims

1. A hose, having a tubular wall, wherein the inner and outer radii of the wall vary axially along the hose to give a plurality of bendable convolutions, the convolutions being defined by an axial sequence of alternate peaks and troughs, each convolution having a height corresponding to the difference in radius between the corresponding peak and trough of that convolution, wherein each convolution varies gradually in height as the convolution extends around the hose, each convolution having a maximum height and a minimum height, the minimum height being 10% or more of the maximum height.

2. A hose according to claim 1 wherein the maximum height of each convolution is at least double the minimum height.

3. A hose according to claim 1 or claim 2 wherein each convolution has two points with the minimum height, the points with the minimum height being separated by a point with the maximum height.

4. A hose according to claim 3 having two points with the maximum height, wherein the two points with the minimum height are on opposite sides of the hose, and the two points with the maximum height are on opposite sides of the hose.

5. A hose according to claim 4, there being 180° circumferential separation between the points with maximum height, 180° circumferential separation between the points with minimum height and 90° circumferential separation between each point with a minimum height and a point with maximum height.

6. A hose, having a tubular wall, wherein the inner and outer radii of the wall vary axially along the hose to give a plurality of bendable convolutions, the convolutions being defined by an axial sequence of alternate peaks and troughs, and each convolution having a height corresponding to the difference in radius between the corresponding peak and trough of that convolution, wherein each convolution varies gradually in height as the convolution extends around the hose, each convolution having a maximum height and a minimum height, there being a circumferential separation of at least 120° between a part of the convolution having the minimum height and any part of the convolution having the maximum height.

7. A hose according to claim 6 wherein the maximum height of each convolution is at least double the minimum height.

8. A hose according to claim 6 wherein the minimum height of each convolution is zero.

9. A hose according to any one of claims 6-8 wherein the height of each convolution varies gradually from a maximum height on one side of the hose to a minimum height on the opposite side of the hose.

10. A hose according to any one of claims 1-9 wherein the convolutions take the form of a series of annular corrugations extending perpendicular or at an angle to the axis of the hose.

11. A hose according to any one of claims 1-9 wherein the convolutions take the form of a helical corrugation which extends around the hose.

12. A hose according to any one of claims 1-11 wherein the minimum heights are axially aligned between successive convolutions.

13. A hose according to any one of claims 1-11 wherein the minimum height of one convolution is aligned with the maximum height of an adjacent convolution.

14. A hose according to any one of claims 1-11 wherein a first part of the hose has its convolutions shaped so that the minimum heights of the convolutions of the first part are axially aligned, and a second part of the hose has its convolutions shaped so that the minimum heights of the convolutions of the second part are in a different axial alignment.

15. A hose according to any one of claims 1-14 wherein the angular rate of change of height of each convolution as it extends around the hose is continuous.

16. A hose according to any one of claims 1-15 wherein the angular rate of change of the angular rate of change of height of each convolution as it extends around the hose is continuous.

17. A hose according to any one of claims 1-16, wherein the variation in height of each convolution as it extends around the hose is sinusoidal.

18. A hose according to any one of claims 1-17 wherein the maximum height of each convolution is 10% or more of the outer radius of the wall of the hose as measured at a trough.

19. A hose according to any one of claims 1-18 composed of stiff plastic, composites or rubber or plastic reinforced with textile fabrics.

20. A motor vehicle having a hose according to any one of claims 1-19.
